# EUROPEAN PATENT APPLICATION

(11) **EP 1 927 289 A1**
(43) Date of publication of application: **04.06.2008**
(21) Application number: 06797283.6
(22) Date of filing: 01.09.2006
(51) Int. Cl.: A23G 4/00

(54) **CHEWING GUM COMPRISING 1-KESTOSE**

(30) Priority: 01.09.2005 JP 2005253727
(71) Applicant: Meiji Seika Kaisha, Ltd., Tokyo 104-8002 (JP)
(72) Inventor: TAKAMIYA, Ryuichi, Sakado-shi, Saitama 350-0214 (JP); SEMBA, Mitsuhiro, Sakado-shi, Saitama 350-0214 (JP)
(74) Representative: Ahner, Francis
(86) International application number: PCT/JP2006/317341
(87) International publication number: WO 2007/026878

(57) **Abstract**

An object of the present invention is to provide a chewing gum which has physiologically active functions of oligosaccharides such as a bifidobacterium proliferation promoting effect, an intestine regulating effect and a mineral absorption promoting effect, and exhibits excellent formability. According to the present invention, there is provided a chewing gum comprising crystalline 1-kestose.

## Description

### Technical Field

The present invention relates to a chewing gum comprising 1-kestose that is a component of fructooligosaccharides.

### Background Art

Fructooligosaccharides, which are a mixture of sugars in which one to three fructose molecules are bonded to the fructose residue of sucrose, have been known to have excellent physiologically active functions such as a bifidobacterium proliferation promoting effect, an intestine regulating effect and a mineral absorption promoting effect, and to be low in calorie and sweetness. Owing to these physiologically active functions, fructooligosaccharides are approved in Japan as a food for specified health use to bear an indication that "fructooligosaccharides regulate the intestine conditions" or that "fructooligosaccharides promote the absorption of minerals." 1-Kestose is an oligosaccharide in which one molecule of fructose is bonded to the fructose residue of sucrose, and accounts for approximately 40% by weight of the components in the commercially available powdery fructooligosaccharides. 1-Kestose has physiologically active functions of a fructooligosaccharide along with nystose and 1F-fructofuranosylnystose in which two and three fructose molecules are bonded to the fructose residue of sucrose, respectively.

Incidentally, chewing gums which have functions such as deodorizing functions and cariostatic functions, and chewing gums which contain vitamins, minerals, amino acids and the like and thus have supplement functions have recently been placed on the market. However, chewing gums which contain oligosaccharides including fructooligosaccharides and exhibit good formability have never been reported.

Confectionery products containing 1-kestose have hitherto been disclosed in Japanese Patent Laid-Open Publication Nos. 159/1997, 65829/1997, 75035/1997, and 57/1998. However, these documents do not disclose chewing gums containing 1-kestose.

Additionally, Japanese Patent Laid-Open Publication No. 2005-168404 discloses a chewing gum composition characterized in containing a polysaccharide that has at least three or more α-1,4 glycoside bonds in the molecule thereof. However, this document discloses that a specific polysaccharide is added to the chewing gum composition for the purpose of masking, over a long period of time, unpleasant tastes such as bitter taste and astringent taste generated during chewing while it does not disclose a chewing gum comprising 1-kestose or the effect of the formability of the chewing gum.

### Summary of the Invention

As described above, in spite of the excellent physiologically active functions of fructooligosaccharides, there has never been reported a chewing gum that contains fructooligosaccharides and exhibits good formability. The chewing gum dough prepared by mixing oligosaccharides including fructooligosaccharides with gum base is dry and crumbly so as to have no binding property, and consequently exhibits no good formability (Comparative Examples 1 to 4). Such insufficient formability is conceivably a reason for the fact that a chewing gum containing fructooligosaccharides and exhibiting good formability has not been reported yet.

The present inventors have found that, contrary to expectation, a chewing gum having good formability can be obtained by mixing crystalline 1-kestose in place of fructooligosaccharides (Examples 1 to 4). The present invention is based on this finding.

An object of the present invention is to provide a chewing gum that has excellent formability while having excellent physiologically active functions belonging to fructooligosaccharides.

According to the present invention, there is provided a chewing gum comprising crystalline 1-kestose.

According to the present invention, there is provided a method for producing a chewing gum which comprises the steps of kneading a mixture comprising crystalline 1-kestose and a gum base, and optionally a sweetener other than crystalline 1-kestose, and sheeting the kneaded mixture.

Crystalline 1-kestose, which is used in the present invention, has physiologically active functions of fructooligosaccharides such as a bifidobacterium proliferation promoting effect, an intestine regulating effect and a mineral absorption promoting effect (BIOmedica 8(7): 534-538 (1993)), Journal of Japanese Society of Nutrition and Food Science (Nippon Elyo Shokuryo Gakkaishi) 52(6): 387-395 (1999)). Accordingly, a chewing gum comprising crystalline 1-kestose according to the present invention is advantageous in that the chewing gum has excellent formability while having excellent physiologically active functions.

### Detailed Description of the Invention

In the present invention, the term "chewing gum" is used in the sense that it includes a stick gum, a sugar-coated gum, and a bubble gum.

The chewing gum according to the present invention can be produced by appropriately adopting such methods that have hitherto been generally used. For example, a chewing gum can be produced by such a general method that a gum base is added with a sugar or a sugar alcohol, a flavor and the like, the mixture thus obtained is mixed into a lump, and the lump is sheeted and cut into forms.

The final form of the chewing gum according to the present invention is not particularly limited in such a way that any of a stick gum, a pellet gum and a tableted gum may be accepted, and a treatment such as sugar coating may be applied after forming.

The chewing gum according to the present invention is characterized in using crystalline 1-kestose as a raw material. The chewing gum according to the present invention may also be produced by using, in addition to crystalline 1-kestose, a gum base, a sweetener such as a sugar or a sugar alcohol, and other raw materials generally used in the production of chewing gums. Hereinafter, individual ingredients are explained separately.

### [Crystalline 1-kestose]

In the production of the chewing gum according to the present invention, crystalline 1-kestose can be used as a raw material. In the present invention, either commercially available crystalline 1-kestose or crystalline 1-kestose prepared according to a known method may be used. Crystalline 1-kestose can be prepared, for example, according to a method described in Japanese Patent No. 3459264.

When crystalline 1-kestose having a purity of less than 90% is used, the formability of the chewing gum is degraded. On the other hand, when the purity is 94% or more, crystalline 1-kestose can be prepared so as to have an arbitrary particle size in the same manner as sugar. Accordingly, the purity of crystalline 1-kestose used in the present invention is preferably 90% or more, and more preferably 94% or more.

The amount of crystalline 1-kestose added to the chewing gum according to the present invention can be 30 to 80% by weight, and preferably 38 to 70% by weight.

### [Gum base]

The gum base that can be added to the chewing gum according to the present invention can be appropriately selected depending on the intended purpose. The gum base can be appropriately selected, for example, from a vegetable resin, a thermosoftening resin, rubber, a natural wax, a fat/oil, a filler and an emulsifying agent, and combinations thereof.

Examples of the vegetable resin include chicle, jelutong and sorva.

Examples of the thermosoftening resin and rubber include vinyl acetate resin, ester gum and polyisobutylene.

Examples of the natural wax and fat/oil include rice wax, candelilla wax, and carnauba wax, and common vegetable oils and hydrogenated oils thereof.

Examples of the filler include talc and calcium carbonate.

Examples of the emulsifying agent include glycerin esters of fatty acids, sorbitan esters and sugar esters.

The amount of the gum base added to the chewing gum according to the present invention can be 15 to 45% by weight, and preferably 20 to 30% by weight.

### [Sweetener]

To the chewing gum according to the present invention, a sweetener such as sugar or sugar alcohol can be added in addition to crystalline 1-kestose within a range that the good formability of the chewing gum is not adversely affected by the addition of the sweetener.

The sugar that can be added to the chewing gum according to the present invention can be appropriately selected depending on the intended purpose. Examples of the sugar include monosaccharides, disaccharides and starch syrup. Examples of the monosaccharides include glucose (grape sugar), galactose, mannose, ribose, arabinose, xylose and ramnose. Examples of the disaccharides include sucrose (saccharose), maltose, lactose, isomaltose, cellobiose, gentiobiose and palatinose. Examples of the starch syrup include acid-saccharized starch syrup and reduced starch syrup.

The sugar alcohol that can be added to the chewing gum according to the present invention can be selected appropriately depending on the intended purpose, and examples of the sugar alcohol include sorbitol, xylitol, mannitol, erythritol, maltitol and reduced palatinose.

Examples of the sweetener that can be added to the chewing gum according to the present invention include, in addition to those described above, aspartame, acesulfame potassium, stevioside, glycylrrhizin, saccharin sodium, sucralose and thaumatin.

The amount of the sweetener, other than crystalline 1-kestose, added to the chewing gum according to the present invention can be 0 to 40% by weight, and preferably 0 to 30% by weight.

The total amount of crystalline 1-kestose and the sweetener other than crystalline 1-kestose, added to the chewing gum according to the present invention can be 50 to 80% by weight, and preferably 65 to 75% by weight. [Other ingredients]

To the chewing gum according to the present invention, a softener, an acid, a colorant and a flavor can be further added depending on need, singly or in appropriate combinations thereof.

The softener can be appropriately selected depending on the intended purpose. Examples of the softener include a polyhydric alcohol and a binder. Examples of the polyhydric alcohol include glycerin and propylene glycol. Examples of the binder include a gum arabic solution and a gelatin solution. The amount of a softener added to the chewing gum according to the present invention can be 0 to 10% by weight.

The acid can be appropriately selected depending on the intended purpose. Examples of the acid include various organic acids such as citric acid, malic acid, tartaric acid, fumaric acid, acetic acid, lactic acid and gluconic acid, and additionally, ascorbic acid. The amount of an acid added to the chewing gum according to the present invention can be 0 to 10% by weight.

The colorant can be appropriately selected depending on the intended purpose. Examples of the colorant include natural colorants and synthetic colorants. The amount of a colorant added to the chewing gum according to the present invention can be 0 to 5% by weight.

The flavor can be appropriately selected depending on the intended purpose. Examples of the flavor include natural flavors, synthetic flavors and blended flavors. The amount of a flavor added to the chewing gum according to the present invention can be 0 to 10% by weight, and preferably 0.2 to 5% by weight.

According to a preferred embodiment of the chewing gum according to the present invention, there is provided a chewing gum containing crystalline 1-kestose in an amount of 38 to 70% by weight.

According to a preferred embodiment of the chewing gum according to the present invention, there is provided a chewing gum comprising crystalline 1-kestose and a gum base, and optionally a sweetener other than crystalline 1-kestose (preferably xylitol).

According to a more preferred embodiment of the chewing gum according to the present invention, there is provided a chewing gum containing 38 to 70% by weight of crystalline 1-kestose, 20 to 30% by weight of a gum base and 0 to 30% by weight of a sweetener other than crystalline 1-kestose (preferably xylitol), provided that the total content of crystalline 1-kestose and the sweetener other than crystalline 1-kestose falls within a range from 65 to 75% by weight, and preferably approximately 70% by weight.

According to a preferred embodiment of the method for producing a chewing gum according to the present invention, there is provided a method for producing a chewing gum which comprises the steps of kneading a mixture comprising 38 to 70% by weight of crystalline 1-kestose, 20 to 30% by weight of a gum base, and 0 to 30% by weight of a sweetener other than crystalline 1-kestose (preferably xylitol), and sheeting the kneaded mixture, provided that the total content of crystalline 1-kestose and the sweetener other than crystalline 1-kestose falls within a range from 65 to 75% by weight, and preferably approximately 70% by weight).

The chewing gum according to the present invention is characterized by having a bifidobacterium proliferation promoting effect, an intestine regulating effect, a mineral absorption promoting effect and the like, and can be provided in a form attached with an explicit statement that "the chewing gum regulates the intestine conditions" and that "the chewing gum promotes the absorption of minerals." Needless to say, the chewing gum according to the present invention includes such use.

### Examples

Hereinafter, Examples are presented to describe the present invention in more detail, but the present invention is not limited to these Examples.

### Example 1

In a kneader, 25% by weight of a gum base, 70% by weight of crystalline 1-kestose (the content of 1-kestose: approximately 95% (purity: 98%, solid content proportion: 97%), trade name: MEIOLIGO CR, manufactured by Meiji Food Materia Co., Ltd.), 2% by weight of citric acid, 0.5% by weight of glycerin and 2.5% by weight of a flavor were placed, and these raw materials were sufficiently kneaded at 55°C to prepare a chewing gum dough. The dough was sheeted and subjected to cutting to produce a stick-shaped chewing gum.

Without any particular inconvenience encountered in the course of the production steps including kneading, sheeting and cutting, the chewing gum could be produced similarly to chewing gums using usual raw materials. The chewing gum thus obtained was found to have the same chewing property as usual chewing gums.

### Example 2

In a kneader, 25% by weight of a gum base, 38% by weight of crystalline 1-kestose, 30% by weight of xylitol, 2% by weight of acid-saccharized starch syrup, 2% by weight of citric acid, 0.5% by weight of glycerin and 2.5% by weight of a flavor were placed, and these raw materials were sufficiently kneaded at 55°C to prepare a chewing gum dough. The dough was sheeted and subjected to cutting to produce a stick-shaped chewing gum.

Without any particular inconvenience encountered in the course of the production steps including kneading, sheeting and cutting, the chewing gum could be produced similarly to chewing gums using usual raw materials. The chewing gum thus obtained was found to have the same chewing property as usual chewing gums.

### Example 3

The chewing gum dough of Example 1 was sheeted and subjected to cutting to obtain a pellet chewing gum. Further, the pellet chewing gum was subjected to sugar coating to produce a sugar-coated pellet chewing gum.

Without any particular inconvenience encountered in the course of the production steps including kneading, sheeting, cutting and sugar coating, the chewing gum could be produced similarly to chewing gums using usual raw materials. The chewing gum thus obtained was found to have the same chewing property as usual chewing gums.

### Example 4

The chewing gum dough of Example 2 was sheeted and subjected to cutting to obtain a pellet chewing gum. Further, the pellet chewing gum was subjected to sugar coating to produce a sugar-coated pellet chewing gum.

Without any particular inconvenience encountered in the course of the production steps including kneading, sheeting, cutting and sugar coating, the chewing gum could be produced similarly to chewing gums using usual raw materials. The chewing gum thus obtained was found to have the same chewing property as usual chewing gums.

### Comparative Example 1

A chewing gum dough was prepared in the same manner as in Example 1 except that the fructooligosaccharide (trade name: MEIOLIGO P powder, manufactured by Meiji Food Materia Co., Ltd.) was used in place of crystalline 1-kestose.

However, the obtained dough was dry and crumbly so as to have no biding property, and thus no lump of dough was obtained. Consequently, the subsequent forming step was impossible. It is to be noted that the phrase "dry and crumbly so as to have no binding property" means a condition that even when a chewing gum dough is attempted to be converted into a continuous lump, unbound portions remain in places, and even the portions once bound together are also weak in binding force and fragile so as to tend to collapse.

### Comparative Example 2

A chewing gum dough was prepared in the same manner as in Example 1 except that the galactooligosaccharide (trade name: CUP-oligo P, manufactured by Nissin Sugar Manufacturing Co. Ltd.) was used in place of crystalline 1-kestose.

However, the obtained dough was dry and crumbly so as to have no biding property, and thus no lump of dough was obtained. Consequently, the subsequent forming step was impossible.

### Comparative Example 3

A chewing gum dough was prepared in the same manner as in Example 1 except that the lactosucrose (trade name: Nyuka Oligo LS-90P, manufactured by Ensuiko Sugar Refining Co., Ltd.) was used in place of crystalline 1-kestose.

However, the obtained dough was dry and crumbly so as to have no biding property, and thus no lump of dough was obtained. Consequently, the subsequent forming step was impossible.

### Comparative Example 4

A chewing gum dough was prepared in the same manner as in Example 2 except that the fructooligosaccharide (trade name: MEIOLIGO P powder, manufactured by Meiji Food Materia Co., Ltd.) was used in place of crystalline 1-kestose.

However, the obtained dough was dry and crumbly so as to have no biding property, and thus no lump of dough was obtained. Consequently, the subsequent forming step was impossible.

From the above-described results, it has been confirmed that the chewing gum dough obtained by using fructooligosaccharides, galactooligosaccharaides or lactosucrose have insufficient formability, and hence no chewing gum can be produced (Comparative Examples 1 to 4), but on the contrary, the chewing gum dough obtained by using crystalline 1-kestose has excellent formability, and hence a chewing gum can be produced (Example 1). Additionally, it has been confirmed that the chewing gum dough obtained by further adding a sugar and a sugar alcohol in addition to crystalline 1-kestose also has excellent formability, and hence a chewing gum can be produced (Example 2). Further, it has been confirmed that even the application of sugar coating treatment after forming does not affect the formability (Examples 3 and 4).

It is known that fructooligosaccharides have hygroscopicity but crystalline 1-kestose is low in hygroscopicity. However, in chewing gum, highly hygroscopic raw materials such as xylitol and sorbitol can be blended in large amounts, and moisture-containing starch syrup can also be blended. Additionally, as has hitherto been known, when the raw materials in chewing gum have absorbed moisture, the chewing gum tends to be sticky, but is not caused to be dry and crumbly and hence the binding property is not lowered. Judging from these facts, conceivably the excellent formability of the chewing gum according to the present invention is not due to the effect related to the presence or absence of the hygroscopicity, but is due to other factors.

## Claims

1. A chewing gum comprising crystalline 1-kestose.

2. A chewing gum according to claim 1, wherein the purity of the crystalline 1-kestose is 90% or more.

3. A chewing gum according to claim 1, wherein the purity of the crystalline 1-kestose is 94% or more.

4. A method for producing a chewing gum which comprises the steps of kneading a mixture comprising crystalline 1-kestose and a gum base, and optionally a sweetener other than crystalline 1-kestose, and sheeting the kneaded mixture.
